# EUROPEAN PATENT APPLICATION

(11) **EP 4 810 849 A1**
(43) Date of publication of application: **23.09.2026**
(21) Application number: 26165488.3
(22) Date of filing: 17.03.2026
(51) Int. Cl.: F16M 11/10, F16M 11/08, F16M 11/18, F16M 11/20, F16M 11/24, F16M 13/02, B60K 35/22, B60K 35/53, B60R 11/02, H04N 5/64

(54) **DISPLAY PANEL DRIVE MECHANISM**

(30) Priority: 21.03.2025 JP 2025047320
(71) Applicant: Alps Alpine Co., Ltd., Ota-ku, Tokyo 145-8501 (JP)
(72) Inventor: Shirashima, Hitoshi, Iwaki-city Fukushima (JP)
(74) Representative: Schmitt-Nilson Schraud Waibel Wohlfrom Patentanwälte Partnerschaft mbB

(57) **Abstract**

A display panel drive mechanism (100; 100A) includes a first link mechanism (1) including a first arm member (11), a second arm member (12) and a third arm member (13) that are coupled to the first arm member, and a fourth arm member (14) coupled to the second arm member. The first arm member, the second arm member, and the fourth arm member are pivotally coupled to the display panel (200). The third arm member and the fourth arm member are pivotally coupled to a base portion (300) located behind the display panel. A maximum length (L1) of the fourth arm member is longer than a maximum length (L2) of the third arm member.

## Description

This application claims priority to Japanese Patent Application No. 2025-047320, filed March 21, 2025.

The present disclosure relates to a display panel drive mechanism.

For example, JP 2022-48480A (hereinafter "Patent Document 1") discloses a display panel drive mechanism including a vertical slide mechanism and a tilt mechanism, wherein the panel is moved in a vertical direction by the vertical slide mechanism and rotated in a tilt direction by the tilt mechanism. JP 2022-53414A (hereinafter "Patent Document 2") discloses a display panel drive mechanism wherein an arm member is rotatably coupled to an upper portion and a lower portion of the display panel, and a guide pin provided in the arm member is moved along a guide groove, whereby the display panel is moved back and forth and vertically.

The present disclosure relates to a display panel drive mechanism according to the appended claims. Embodiments are disclosed in the dependent claims.

A display panel drive mechanism according to an embodiment of the present disclosure includes a first link mechanism including a first arm member, a second arm member and a third arm member that are coupled to the first arm member, and a fourth arm member coupled to the second arm member. The first arm member, the second arm member, and the fourth arm member are pivotally coupled to the display panel. The third arm member and the fourth arm member are pivotally coupled to a base portion located behind the display panel. A maximum length of the fourth arm member is longer than a maximum length of the third arm member.

### BRIEF DESCRIPTION OF THE DRAWINGS

FIG. 1 is a schematic perspective view illustrating a configuration of a display panel drive mechanism according to a first embodiment when a display panel is positioned at a starting point;
FIG. 2 is a schematic perspective view illustrating a state after the display panel drive mechanism according to the first embodiment causes the display panel to undergo translational movement to a position near an end point;
FIG. 3 is a schematic perspective view illustrating a state after the display panel drive mechanism according to the first embodiment tilts the display panel when the display panel is at a position near the end point;
FIG. 4 is a schematic view illustrating advantageous effects of the display panel drive mechanism according to the first embodiment;
FIG. 5 is a schematic perspective view illustrating a configuration of the display panel drive mechanism according to the first embodiment;
FIG. 6 is a schematic exploded perspective view of the display panel drive mechanism according to the first embodiment;
FIG. 7 is a schematic top view illustrating a state in which the display panel is positioned at a starting point in the display panel drive mechanism according to a second embodiment; and
FIG. 8 is a schematic top view illustrating a state in which the display panel drive mechanism according to the second embodiment tilts the display panel after causing the display panel to undergo translational movement to a position near an end point.

However, in the display panel drive mechanism described in Patent Document 1, since the vertical slide mechanism and the tilt mechanism are separate mechanisms, there is room for enhancement from the viewpoint of vibration resistance. In the display panel drive mechanism described in Patent Document 2, the tilt angle of the display panel cannot be changed.

According to an embodiment of the present disclosure, it is possible to provide a display panel drive mechanism which can perform translational movement and tilting of a display panel and has enhanced vibration resistance.

Embodiments of the present disclosure will be described below with reference to the drawings. However, the following embodiments are illustrative of embodiments for realizing the technical concept of the present disclosure, and are not limited to the following. Since each of the drawings schematically illustrates an embodiment of the present disclosure, the scale, spacing, positional relationship, or the like of each member may be exaggerated, or a part of the member may be omitted.

In the following description, components having substantially the same function are indicated by common reference numerals, and description thereof will be omitted if necessary. Terms indicating a specific direction or position, such as "above", "below", and other terms including these terms, may be used. However, these terms are used only for ease of understanding of the relative direction or position in the referenced drawings. As long as the relative direction or position in terms of "above", "below", or the like in the referenced drawings is the same, the drawings, actual products, or the like other than the present disclosure need not have the same arrangement as in the referenced drawings. In this specification, the positional relationship expressed as "above" includes a case where they are in contact with each other and a case where they are located above but not in contact with each other. The positional relationship expressed as "below" includes a case where they are in contact with each other and a case where they are located below but not in contact with each other.

In each drawing, orthogonal coordinates having an X-axis, a Y-axis, and a Z-axis are used as a direction expression. The X-axis, the Y-axis and the Z-axis are orthogonal to each other. In the X-direction, the direction toward which the arrow is directed is denoted as the +X-side, and the direction opposite to the +X-side is denoted as the -X-side. In the Y-direction, the direction toward which the arrow is directed is denoted as the +Y-side, and the direction opposite to the +Y-side is denoted as the -Y-side. In the Z-direction, the direction toward which the arrow is directed is denoted as the +Z-side, and the direction opposite to the +Z-side is denoted as the -Z-side. In this specification, as an example, the +Z-side corresponds to "up", and the -Z-side corresponds to "down". The +X-side corresponds to "right", and the -X-side corresponds to "left". The +Y-side corresponds to "forward", and the -Y-side corresponds to" backward".

### <First Embodiment>

### <Configuration and Operation of Display Panel Drive Mechanism according to

### First Embodiment>

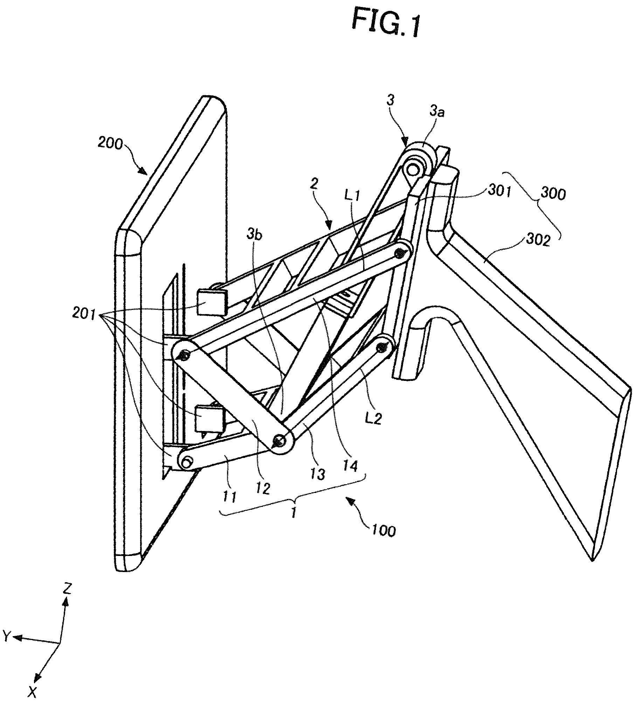

The configuration and operation of a display panel drive mechanism according to a first embodiment of the present disclosure will be described with reference to FIGS. 1 through 6.

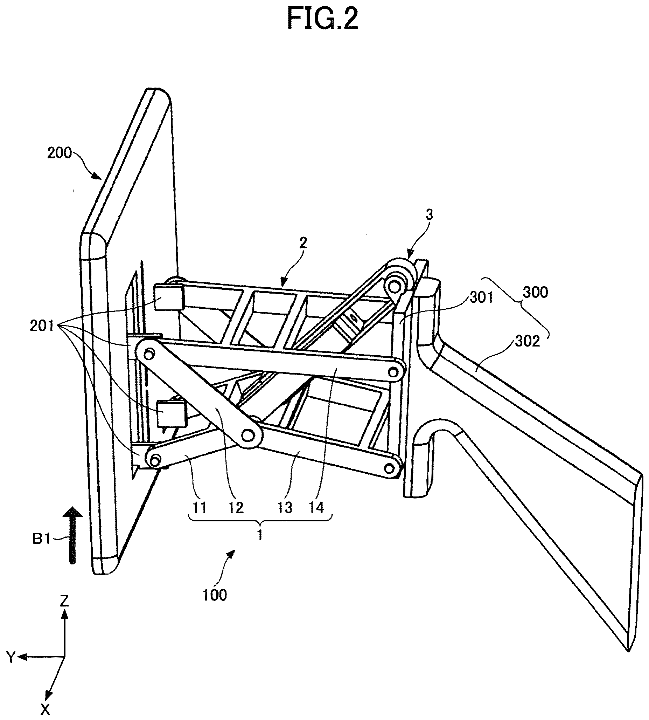

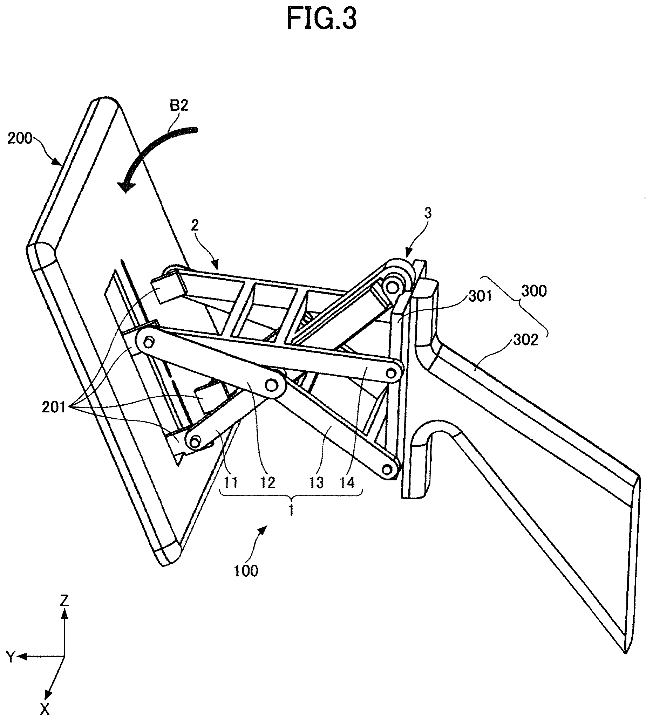

FIG. 1 is a schematic perspective view illustrating a configuration of a display panel drive mechanism 100 according to a first embodiment of the present disclosure in which the display panel 200 is positioned at a starting point. FIG. 2 is a schematic perspective view illustrating a state after the display panel drive mechanism 100 causes the display panel 200 to undergo translational movement to a position near an end point. FIG. 3 is a schematic perspective view illustrating a state after the display panel drive mechanism 100 tilts the display panel 200 when the display panel 200 is at a position near the end point.

As illustrated in FIG. 1, the display panel 200 is provided with a first link mechanism 1 including a first arm member 11, a second arm member 12 and a third arm member 13 coupled to the first arm member 11, and a fourth arm member 14 coupled to the second arm member 12. The first arm member 11, the second arm member 12, and the fourth arm member 14 are pivotally coupled to the display panel 200. The third arm member 13 and the fourth arm member 14 are pivotally coupled to a base portion 300 located on the -Y side of the display panel 200. The maximum length L1 of the fourth arm member 14 is longer than the maximum length L2 of the third arm member 13.

The display panel drive mechanism 100 is coupled to the base portion 300 that forms a part of a dashboard of an automobile, and moves a display panel 200 such as a liquid crystal display panel or an organic electroluminescence (EL) display panel. The display panel 200 is, for example, a display device for a touch panel which is arranged on a dashboard of an automobile and allows a driver or a passenger of the automobile to operate the air conditioner or adjust the position or posture of the seat. The display panel 200 is a display device for allowing a driver to view navigation images displayed by a navigation system and for allowing a passenger to view entertainment videos or the like.

The display panel drive mechanism 100 can cause the display panel 200 to undergo translational movement in the Z direction from the starting point toward the end point located above the starting point and tilt the display panel 200 when the display panel 200 is at a position near the end point in such a manner that the pitch angle of the display panel 200 changes. The pitch angle of the display panel 200 means a rotation angle of the display panel 200 about the rotation axis extending along the X direction, orthogonal to the Z direction.

As illustrated in FIGS. 1 and 2, when the display panel 200 is caused to undergo translational movement in the direction of arrow B1 from the starting point to a position near the end point, the pitch angle of the display panel 200 does not substantially change. After being caused to undergo translational movement to a position near the end point, the display panel 200 is tilted in the direction of arrow B2 in such a manner that the pitch angle changes as illustrated in FIG. 3. The operation of tilting the display panel 200 when the display panel 200 is at a position near the end point after causing the display panel 200 to undergo translational movement is continuously performed as a series of operations. The display panel 200 is tilted to a predetermined pitch angle and then stopped at the end point. In this manner, the display panel drive mechanism 100 can perform translation and tilting of the display panel 200 by a single drive mechanism.

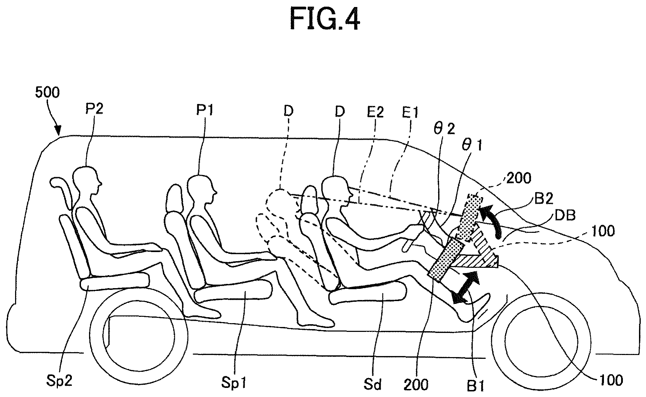

Herein, FIG. 4 is a schematic diagram for explaining the advantageous effects of the display panel drive mechanism 100. FIG. 4 illustrates an automobile 500 in a state in which a driver D is seated in a driver's seat Sd, a first passenger P1 is seated in a first row rear seat Sp1, and a second passenger P2 is seated in a second row rear seat Sp2, as seen through the interior of the automobile 500. The display panel 200 and the display panel drive mechanism 100 for driving the display panel 200 are arranged on a dashboard DB of the automobile 500.

In FIG. 4, the display panel 200 is represented by a dot pattern and the display panel drive mechanism 100 is represented by a hatched pattern for convenience of explanation. To avoid excessive complexity of the drawing, FIG. 4 illustrates the display panel drive mechanism 100 in a simplified manner. The display panel 200 and the display panel drive mechanism 100 illustrated by solid lines represent the display panel 200 and the display panel drive mechanism 100 in a state where the display panel 200 is positioned at the starting point. The display panel 200 and the display panel drive mechanism 100 illustrated by broken lines represent the display panel 200 and the display panel drive mechanism 100 in a state where the display panel 200 is positioned at the end point.

When the display panel 200 is positioned at the starting point, the display panel 200 is used as a display device for a touch panel for the driver D to operate the air conditioner or to adjust the position or posture of the seat. When the display panel 200 is positioned at the end point, the display panel 200 is used as a display device for the driver D to view navigation images by a navigation system or for the driver D, the first passenger P1, or the second passenger P2 to view entertainment videos or the like.

The closer the line of sight of the driver D who is looking at the display panel 200 is to being perpendicular to the display surface of the display panel 200, the easier it is for the driver to see the display panel 200. On the other hand, the more the line of sight of the driver D who is looking at the display panel 200 deviates from being perpendicular and becomes oblique to the display surface of display panel 200, the more difficult it becomes for the driver to see the display panel 200. When the display panel 200 is positioned at the end point, the display panel 200 needs to offer good visibility because navigation images or entertainment videos, etc., are viewed by the driver D or the passenger P. On the other hand, when the display panel 200 is positioned at the starting point, the display panel 200 does not need to offer the same level of visibility as when the driver D or the passenger P views navigation images or entertainment videos, etc.

For example, in the case where a general display panel drive mechanism causes the display panel 200 to undergo translational movement from the starting point to the end point without tilting the display panel 200, the pitch angle of the display surface of the display panel 200 does not change but only the position in the vertical direction changes. As a result, the driver D views the display surface of the display panel 200 positioned at the end point from an oblique angle instead of a vertical angle, which makes it difficult for the driver D to view videos or images displayed on the display panel 200. When the driver D reclines the driver's seat Sd during a non-driving period, as illustrated by a broken line in FIG. 4, for example, while the vehicle battery is being charged, the driver D looks at the display surface of the display panel 200 positioned at the end point from an angle that is offset from the vertical angle. As a result, it is difficult for the driver D to view videos or images displayed on the display panel 200.

The display panel drive mechanism 100 according to the first embodiment of the present disclosure causes the display panel to undergo translational movement to a position near the end point, and then tilts the display panel 200 in the direction of arrow B2 in such a manner that the pitch angle changes. Thus, even in the case where the angle θ1 of the display surface of the display panel 200 with respect to the line of sight E1 of the driver D deviates from the vertical according to the position change of the display panel 200, the display panel 200 can be tilted in such a manner that the angle θ1 approaches the vertical. In the case where the driver D reclines the driver's seat Sd, the display panel 200 can be tilted in such a manner that the angle θ2 of the display surface of the display panel 200 with respect to the line of sight E2 of the driver D approaches the vertical. In this manner, the display panel drive mechanism 100 can change the pitch angle of the display panel 200 in such a manner that the angle θ1 approaches the vertical with respect to the line of sight E1 of the driver D or so that the angle θ2 approaches the vertical with respect to the line of sight E2 of the driver D. As a result, the driver D can easily view videos or images displayed on the display panel 200 positioned at the end point.

The display panel drive mechanism 100 performs translation and tilting of the display panel 200 by a single drive mechanism, not by separate drive mechanisms. Accordingly, as compared with a configuration in which translation and tilting of the display panel 200 are performed by separate drive mechanisms, the display panel drive mechanism 100 can be reduced in weight. Furthermore, a structure that avoids low-rigidity arrangements, such as cantilever beam structures, can be realized. As a result, the rigidity of the display panel drive mechanism 100 can be increased and the vibration resistance of the display panel drive mechanism 100 can be enhanced. From another point of view, even in the case where the display panel drive mechanism 100 is used in an environment prone to vibration, it is possible to reduce malfunction, failure, breakage, or the like caused by vibration. As described above, according to the first embodiment of the present disclosure, it is possible to provide the display panel drive mechanism 100 capable of performing translational movement and tilting of the display panel 200 and having enhanced vibration resistance.

When the driver D has finished viewing the video or image displayed on the display panel 200, the display panel drive mechanism 100 moves the display panel 200 in such a manner that the display panel 200 returns to the starting point. When the display panel 200 returns to the starting point, the driver D can use the display panel 200 as a display device for a touch panel used for operating the air conditioner or adjusting the position or posture of the seat.

In the display panel drive mechanism 100, vibration resistance of the display panel drive mechanism 100 is enhanced by performing translation and tilting of the display panel 200 by a single drive mechanism. Therefore, the configuration for enhancing vibration resistance of the display panel drive mechanism, such as a torque hinge or a reduction gear, can be reduced. This simplifies the configuration of the display panel drive mechanism 100 and makes it easy to reduce the cost of the display panel drive mechanism 100.

In the above description, the advantageous effect of improved visibility when the driver D views videos or images displayed on the display panel 200 has been presented as an example; however, a similar effect can also be obtained when the first passenger P1 or the second passenger P2 views videos or images displayed on the display panel 200. The same advantageous effect can be obtained not only in the case where the first passenger P1 is seated in the first row rear seat Sp1 and the second passenger P2 is seated in the second row rear seat Sp2, but also in a case where the passenger is seated in the front passenger seat.

The appropriate pitch angle of the display panel 200 positioned at the end point varies according to the sitting height or the posture of the driver D. Therefore, the display panel drive mechanism 100 can determine the pitch angle of the display panel 200 positioned at the end point by, for example, the following method. In other words, information about the appropriate pitch angle associated with the driver D is stored in the storage device in advance. The display panel drive mechanism 100 reads information about the pitch angle corresponding to the driver D from the storage device based on identification information or the like of the driver D. The display panel drive mechanism 100 determines the pitch angle of the display panel 200 positioned at the end point based on the information about the pitch angle that is read from the storage device. However, the method of determining the pitch angle of the display panel 200 is not limited to the above-described method. For example, the appropriate pitch angle of the display panel 200 may be determined by calculation based on a photographed image of the driver D by an in-vehicle camera or the like. The display panel drive mechanism 100 can tilt the display panel 200 positioned at the end point according to the determined pitch angle.

The maximum pitch angle of the display panel 200 positioned at the end point is determined by a ratio (L1/L2) between the maximum length L1 of the fourth arm member 14 and the maximum length L2 of the third arm member 13. For example, the larger the ratio (L1/L2), the larger the maximum pitch angle. As long as the maximum length L1 is longer than the maximum length L2, the maximum length L1 and the maximum length L2 can be appropriately determined according to the required specifications of the maximum pitch angle of the display panel 200 positioned at the end point.

In the example illustrated in FIGS. 1 through 3, the display panel drive mechanism 100 further includes a second link mechanism 2 and an advancing and retreating mechanism 3. The base portion 300 includes a base-portion-side joint 301 and a support portion 302 for supporting the base-portion-side joint 301. The first link mechanism 1 and the second link mechanism 2 are connected to the display panel 200 via display-panel-side joints 201. The first link mechanism 1 and the second link mechanism 2 are connected to the base portion 300 via the base-portion-side joint 301. Details of the second link mechanism 2 and the advancing and retreating mechanism 3 will be described below. The components not denoted by reference numerals in FIGS. 1 through 3 will be described below.

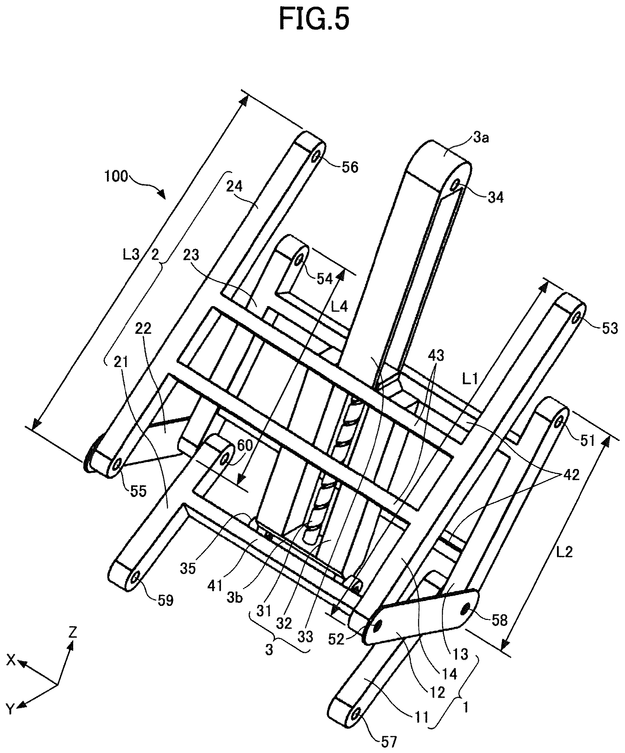

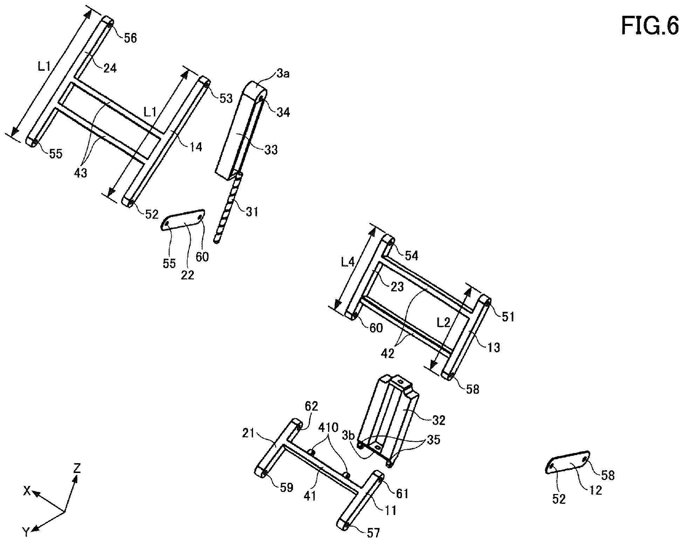

Each component of the display panel drive mechanism 100 will be described in detail with reference to FIGS. 5 and 6. FIG. 5 is a schematic perspective view illustrating the configuration of the display panel drive mechanism 100. FIG. 6 is a schematic exploded perspective view of the display panel drive mechanism 100.

### (First Link Mechanism 1 and Second Link Mechanism 2)

In the examples illustrated in FIGS. 5 and 6, the second link mechanism 2 includes a fifth arm member 21, a sixth arm member 22 and a seventh arm member 23 that are coupled to the fifth arm member 21, and an eighth arm member 24 that is coupled to the sixth arm member 22. The display panel drive mechanism 100 includes a first connector 41 for connecting the first arm member 11 and the fifth arm member 21, a second connector 42 for connecting the third arm member 13 and the seventh arm member 23, and a third connector 43 for connecting the fourth arm member 14 and the eighth arm member 24. The fifth arm member 21, the sixth arm member 22, and the eighth arm member 24 are pivotally coupled to the display panel 200. The seventh arm member 23 and the eighth arm member 24 are pivotally coupled to the base portion 300. The maximum length L3 of the eighth arm member 24 is longer than the maximum length of the seventh arm member 23.

In the example illustrated in FIG. 5, the first link mechanism 1 and the second link mechanism 2 have shapes that are mirror symmetrical with respect to a virtual plane including the advancing and retreating mechanism 3, which is parallel to the YZ plane, and are arranged at positions that are mirror symmetrical.

In the examples illustrated in FIGS. 5 and 6, the third arm member 13 is provided with a first joint 51 and an eighth joint 58. The fourth arm member 14 is provided with a second joint 52 and a third joint 53. The seventh arm member 23 is provided with a fourth joint 54 and a tenth joint 60. The eighth arm member 24 is provided with a fifth joint 55 and a sixth joint 56. The first arm member 11 is provided with a seventh joint 57 and a first joint hole 61. The second arm member 12 is provided with a second joint 52 and an eighth joint 58. The fifth arm member 21 is provided with a ninth joint 59 and a second joint hole 62. The sixth arm member 22 is provided with a fifth joint 55 and a tenth joint 60.

The first joint 51, the second joint 52, the third joint 53, the fourth joint 54, the fifth joint 55, the sixth joint 56, the seventh joint 57, the eighth joint 58, the ninth joint 59, and the tenth joint 60 are through holes. Screws or the like inserted through the through holes are fixed to a joint target portion, such as the base-portion-side joint 301 or the display-panel-side joint 201, thereby coupling each joint and the joint target portion.

The eighth joint 58 provided in the second arm member 12 and the other eighth joint 58 provided in the third arm member 13 function as one eighth joint 58 by overlapping with each other. When a screw or the like inserted through the eighth joint 58 is fixed into the first joint hole 61 of the first arm member 11, the first arm member 11, the second arm member 12, and the third arm member 13 are pivotally coupled to each other about the eighth joint 58, which serves as the rotation center.

The tenth joint 60 provided in the sixth arm member 22 and the other tenth joint 60 provided in the seventh arm member 23 function as one tenth joint 60 by overlapping with each other. When a screw or the like inserted through the tenth joint 60 is fixed into the second joint hole 62 of the fifth arm member 21, the fifth arm member 21, the sixth arm member 22, and the seventh arm member 23 are pivotally coupled to each other about the tenth joint 60, which serves at the rotation center.

The third arm member 13 is pivotally coupled to the base portion 300 about the first joint 51, which serves as the rotation center, by fixing a screw or the like inserted through the first joint 51 into a joint hole provided in the base-portion-side joint 301. The fourth arm member 14 is pivotally coupled to the display panel 200 about the second joint 52, which serves as the rotation center, by fixing a screw or the like inserted through the second joint 52 into a joint hole provided in the display-panel-side joint 201. The fourth arm member 14 is pivotally coupled to the base portion 300 about the third joint 53, which serves as the rotation center, by fixing a screw or the like, inserted through the third joint 53, into a joint hole provided in the base-portion-side joint 301.

The seventh arm member 23 is pivotally coupled to the base portion 300 about the fourth joint 54, which serves as the rotation center, by fixing a screw or the like, inserted through the fourth joint 54, into a joint hole provided in the base-portion-side joint 301. The eighth arm member 24 is pivotally coupled to the display panel 200 about the fifth joint 55, which serves as the rotation center, by fixing a screw or the like, inserted through the fifth joint 55, into a joint hole provided in the display-panel-side joint 201. The eighth arm member 24 is pivotally coupled to the base portion 300 about the sixth joint 56, which serves as the rotation center by fixing a screw or the like, inserted through the sixth joint 56, into a joint hole provided in the base-portion-side joint 301.

The first arm member 11 is pivotally coupled to the display panel 200 about the seventh joint 57, which serves as the rotation center, by fixing a screw or the like, inserted through the seventh joint 57, into a joint hole provided in the display-panel-side joint 201. The fifth arm member 21 is pivotally coupled to the display panel 200 about the ninth joint 59, which serves as the rotation center, by fixing a screw or the like, inserted through the ninth joint 59, into a joint hole provided in the display-panel-side joint 201.

Each of the first link mechanism 1 and the second link mechanism 2 can be configured to include a metal, a resin, or the like.

Being provided with the first link mechanism 1 and the second link mechanism 2, the display panel drive mechanism 100 can fix the display panel 200 and the display panel drive mechanism 100 at four locations and move the display panel 200. Specifically, the display panel drive mechanism 100 can be coupled to the display panel 200 at four locations, namely the second joint 52, the fifth joint 55, the seventh joint 57, and the ninth joint 59, thereby securing the display panel 200. The display panel drive mechanism 100 can further enhance vibration resistance by fixing the display panel 200 and the display panel drive mechanism 100 at four locations.

### (First Connector 41, Second Connector 42, and Third Connector 43)

In the examples illustrated in FIGS. 5 and 6, the first connector 41 is a beam-like portion extending in the X direction and connecting the first arm member 11 and the fifth arm member. The second connectors 42 are two beam-like portions extending in the X direction and connecting the third arm member 13 and the seventh arm member 23. The third connectors 43 are two beam-like portions extending in the X direction and connecting the fourth arm member 14 and the eighth arm member 24. The number of beams in the first connector 41, the second connectors 42, and the third connectors 43 can be appropriately changed in accordance with the maximum length of the arm members to be connected.

The first connector 41, the second connectors 42, and the third connectors 43 are integrally formed with the first link mechanism 1 and the second link mechanism 2, respectively. However, at least one of the first connector 41, the second connectors 42, and the third connectors 43 may be formed separately from the first link mechanism 1 and the second link mechanism 2 (in other words, a separate member) and joined to the first link mechanism 1 and the second link mechanism 2 by an adhesive member, a screw, or the like. In the case where the first connector 41, the second connectors 42, and the third connectors 43 are formed separately from the first link mechanism 1 and the second link mechanism 2, the first connector 41, the second connectors 42, and the third connectors 43 may be configured to include a metal, a resin, or the like.

### (Advancing and Retreating Mechanism 3)

The advancing and retreating mechanism 3 is a mechanism having a first end 3a pivotally coupled to the base portion 300 and configured to advance toward and move away from the base portion 300. A second end 3b of the advancing and retreating mechanism 3 is coupled to the first connector 41. However, the second end 3b of the advancing and retreating mechanism 3 is not limited to the first connector 41, and may be connected to the second connector 42.

In the examples illustrated in FIGS. 5 and 6, the advancing and retreating mechanism 3 includes a lead screw 31, a holding member 32 for holding the lead screw 31, and a nut 33 for connecting to the lead screw 31. Each of the lead screw 31 and the nut 33 may be configured to include a metal or the like. The holding member 32 may be configured to include a resin, a metal, or the like.

The first end 3a of the advancing and retreating mechanism 3 is provided with a first-end joint 34 as a through hole. The first end 3a of the advancing and retreating mechanism 3 is pivotally coupled to the base portion 300 by fixing a screw or the like, inserted into the first-end joint 34, into a joint hole provided in the base-portion-side joint 301.

The second end 3b of the advancing and retreating mechanism 3 is provided with a second-end joint 35 including two through holes. The first connector 41 is provided with a connector-side joint 410 including two joint holes. The second end 3b of the advancing and retreating mechanism 3 is pivotally coupled to the first connector 41 by fixing two screws or the like, inserted through the respective through holes of the second-end joint 35, respectively into the two joint holes of the connector-side joint 410.

A rotary drive portion, such as a motor, is coupled to the lead screw 31. The lead screw 31 rotates with the rotary drive portion as a drive source and a line along the direction in which the lead screw 31 extends as the rotation center. As the lead screw 31 rotates, the relative position of the lead screw 31 with respect to the nut 33 changes, and the advancing and retreating mechanism 3 advances toward and moves away from the base portion 300. As the advancing and retreating mechanism 3 advances toward and moves away from the base portion 300, the relative position of the first connector 41 with respect to the base portion 300 changes. Thus, the display panel drive mechanism 100 can move the display panel 200.

In the first embodiment of the present disclosure, by moving the display panel 200 using the advancing and retreating mechanism 3, the rigidity of the display panel drive mechanism 100 can be further increased and the vibration resistance of the display panel drive mechanism 100 can be further improved. For example, the rigidity of the display panel drive mechanism 100 can be further increased and vibration resistance of the display panel drive mechanism 100 can be further enhanced as compared with the case where the display panel 200 is moved by connecting the motor axis to the first joint 51 and pivoting the third arm member 13 about the first joint 51, which serves as the rotation center, by the rotation of the motor axis.

### <Second Embodiment>

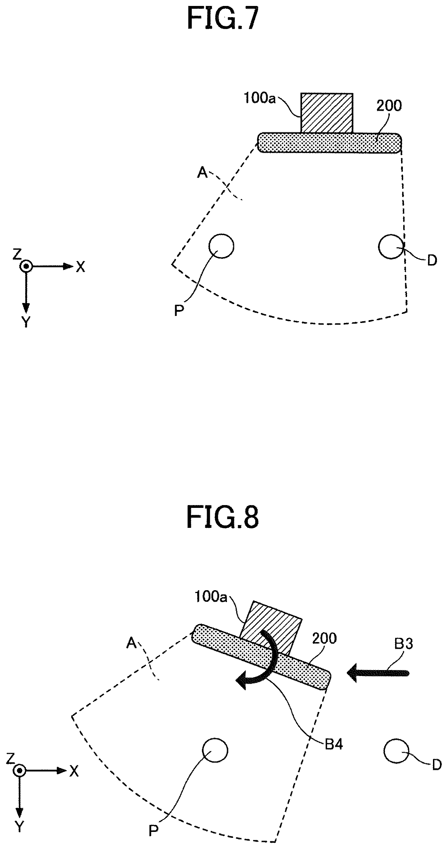

Next, the display panel drive mechanism according to a second embodiment of the present disclosure will be described with reference to FIGS. 7 and 8. It should be noted that the same names and reference numerals as those of the already described embodiments indicate the same or similar members or configurations, and the detailed description thereof will be omitted as appropriate.

FIG. 7 is a schematic top view illustrating a state in which the display panel 200 is positioned at a starting point in a display panel drive mechanism 100a according to a second embodiment of the present disclosure. FIG. 8 is a schematic top view illustrating a state in which the display panel drive mechanism 100a tilts the display panel 200 after causing the display panel 200 to undergo translational movement to a position near an end point.

FIGS. 7 and 8 illustrate the display panel drive mechanism 100a and the display panel 200 arranged on a dashboard, the driver D sitting in the driver's seat, and a passenger P sitting in a passenger's seat in an automobile as viewed from the +Z side. In FIGS. 7 and 8, for convenience of explanation, the display panel 200 is represented by a dot pattern, and the display panel drive mechanism 100a is represented by a diagonal line pattern. The display panel drive mechanism 100a is illustrated in simplified form.

The display panel drive mechanism 100a causes the display panel 200 to undergo translational movement in the X direction from the starting point toward the end point located closer on the -X side than the starting point, and tilts the display panel 200 when the display panel 200 is at a position near the end point in such a manner that the yaw angle of the display panel 200 changes. The display panel drive mechanism 100a is different from the display panel drive mechanism 100a according to the first embodiment of the present disclosure in this regard. The yaw angle of the display panel 200 means a tilt angle of the display panel 200 about a line serving as the rotation axis extending along the Z direction.

In FIGS. 7 and 8, when the display panel 200 is caused to undergo translational movement in the direction of arrow B3 from the starting point to a position near the end point, the yaw angle of the display panel 200 does not substantially change. After the display panel 200 is caused to undergo translational movement to a position near the end point, the display panel 200 is tilted in the direction of arrow B4 in such a manner that the yaw angle changes. The operation of tilting the display panel 200 when the display panel 200 at a position near the end point after causing the display panel 200 to undergo translational movement is continuously performed as a series of operations. The display panel 200 is tilted to a predetermined yaw angle and then stopped at the end point. In this manner, the display panel drive mechanism 100a can perform the translational movement and tilting of the display panel 200 by a single drive mechanism.

When the display panel 200 is positioned at the starting point, it is used as a display device for a touch panel for the driver D sitting in the driver's seat to operate the air conditioner or to adjust the position or posture of the seat. When the display panel 200 is positioned at the end point, it is used as a display device for the passenger P sitting in the passenger's seat to view entertainment videos or the like. When the display panel 200 is caused to undergo translational movement from the driver's seat side to the passenger's seat side and the yaw angle is changed so as to approach perpendicular to the line of sight of the passenger P, the passenger P sitting in the passenger's seat can easily view entertainment videos or the like.

A switchable privacy technology for enhancing safety may be adopted for the display panel when, for example, the driver D is driving. Herein, the switchable privacy technology refers to a technology that automatically restricts the field of view in which the driver D can observe videos or images displayed on the display panel 200 based on the line of sight of the driver D so that the videos or images are not visible to the driver D. However, since the range in which the field of view of the driver D can be restricted is limited in the switchable privacy technology, videos or images displayed on the display panel 200 may become visible to the driver D in some cases. The larger the display panel 200 is, the more difficult it is to limit the field of view of the driver D.

Since the display panel drive mechanism 100a can tilt the display panel 200 in such a manner that the yaw angle changes after causing the display panel 200 to undergo translational movement, the field of view that the driver D can observe can be more suitably limited in the switchable privacy technology.

For example, in FIGS. 7 and 8, the range A indicates a range in which the driver D and the passenger P can observe videos or images displayed on the display panel 200. When the driver D or the passenger P is located within the range A, they can observe videos or images displayed on the display panel 200. On the other hand, when the driver D or the passenger P is located outside the range A, they cannot observe videos or images displayed on the display panel 200.

In the example illustrated in FIG. 7, since the passenger P and the driver D are located within the range A, the driver D and the passenger P can observe videos or images displayed on the display panel 200. On the other hand, in the example illustrated in FIG. 8, when the display panel 200 is caused to undergo translational movement to the -X side and the yaw angle is changed, the passenger P is located within the range A and the driver D is located outside the range A. Thus, the passenger P can observe videos or images displayed on the display panel 200, while the driver D cannot. Since the driver D cannot observe videos or images displayed on the display panel 200, the driver D can drive the automobile more safely than the case where the driver D can observe videos or images displayed on the display panel 200.

The method of determining the appropriate yaw angle, which differs for each driver D and passenger P, can be the same as the method of determining the appropriate pitch angle described in the first embodiment. Other advantageous effects of the display panel drive mechanism 100a are the same as those of the display panel drive mechanism 100 described in the first embodiment.

Although preferred embodiments have been described in detail above, various modifications and substitutions can be made to the above-described embodiments without departing from the scope of the appended claims.

For example, the display panel drive mechanism according to an embodiment of the present disclosure may be provided with only the first link mechanism 1 without the second link mechanism 2. In this case as well, it is possible to provide the display panel drive mechanism 100 that can perform translational movement and tilting of the display panel 200 and has enhanced vibration resistance.

In the case where the display panel drive mechanism according to an embodiment of the present disclosure is provided with only the first link mechanism 1, it may be provided with the advancing and retreating mechanism 3 pivotally coupled to the base portion 300 about the first end 3a and configured to advance toward and move away from the base portion 300. The second end 3b of the advancing and retreating mechanism 3 may be coupled to the first arm member 11 or the third arm member 13. In this case as well, it is possible to provide the display panel drive mechanism 100 that can perform translational movement and tilting of the display panel 200 and has enhanced vibration resistance.

The display panel drive mechanism according to an embodiment of the present disclosure may move the display panel 200 without the advancing and retreating mechanism 3. For example, the display panel drive mechanism according to an embodiment of the present disclosure may move the display panel 200 by pivoting the third arm member 13 about the first joint 51 by which the third arm member 13 is coupled to the base portion 300, pivoting the fourth arm member 14 about the second joint 52 by which the fourth arm member 14 is coupled to the display panel 200, or pivoting the fourth arm member 14 about the third joint 53 by which the fourth arm member 14 is coupled to the base portion 300. In this case as well, it is possible to provide the display panel drive mechanism 100 that can perform translation and tilting of the display panel 200 and has enhanced vibration resistance.

For example, in the case where the third arm member 13 pivots about the first joint 51 of the third arm member 13 and the base portion 300, the third arm member 13 is directly or indirectly connected to a rotary drive portion, such as a motor, in such a manner that the third arm member 13 can pivot about the first joint 51. "Directly connected to the rotary drive portion" means that the rotation axis of the rotary drive portion and the object to be rotated (for example, the third arm member 13) are connected without any other member. "Indirectly connected to the rotary drive portion" means that the rotation axis of the rotary drive portion and the object to be rotated are connected through any other member such as a gear or a pulley.

For example, in the case where the fourth arm member 14 pivots about the second joint 52 by which the fourth arm member 14 is coupled to the display panel 200, the fourth arm member 14 is directly or indirectly connected to the rotary drive portion, such as a motor, so that the fourth arm member 14 can pivot about the second joint 52. For example, in the case where the fourth arm member 14 pivots about the third joint 53 by which the fourth arm member 14 is coupled to the base portion 300, the fourth arm member 14 is directly or indirectly connected to the rotary drive portion, such as a motor, so that the fourth arm member 14 can pivot about the third joint 53.

In the case where the display panel drive mechanism according to an embodiment of the present disclosure is provided with the second link mechanism 2, the display panel drive mechanism is not provided with the advancing and retreating mechanism 3, and the display panel 200 may be moved instead by the seventh arm member 23 pivoting about the fourth joint 54 by which the seventh arm member 23 is coupled to the base portion 300, the eighth arm member 24 pivoting about the fifth joint 55 by which the eighth arm member 24 is coupled to the display panel 200, or the eighth arm member 24 pivoting about the sixth joint 56 by which the eighth arm member 24 is coupled to the base portion 300. In this case, it is possible to provide the display panel drive mechanism 100 which can perform translational movement and tilting of the display panel 200 and has enhanced vibration resistance.

For example, in the case where the seventh arm member 23 pivots about the fourth joint 54 by which the seventh arm member 23 is coupled to the base portion 300, the seventh arm member 23 is directly or indirectly connected to a rotary drive portion, such as a motor, so that the seventh arm member 23 can pivot about the fourth joint 54. For example, in the case where the eighth arm member 24 pivots about the fifth joint 55 by which the eighth arm member 24 is coupled to the display panel 200, the eighth arm member 24 is directly or indirectly connected to a rotary drive portion, such as a motor, so that the eighth arm member 24 can pivot about the fifth joint 55. For example, in the case where the eighth arm member 24 pivots about the sixth joint 56 by which the eighth arm member 24 is coupled to the base portion 300, the eighth arm member 24 is directly or indirectly connected to a rotary drive portion, such as a motor, so that the eighth arm member 24 can pivot about the sixth joint 56.

Numbers such as ordinals and quantities used in the description of the embodiments are all exemplified for the purpose of concretely explaining the technology of the present disclosure, and the present disclosure is not limited to the exemplified numbers. The connection relationship between the components is exemplified for the purpose of concretely explaining the technology of the present disclosure, and the connection relationship for realizing the function of the present disclosure is not limited thereto.

The display panel drive mechanism of the present disclosure can be particularly preferably used as a mechanism for driving a display panel mounted on an automobile, which is required to be resistant to vibration according to a road surface condition or the like, because the display panel is translatable and tiltable and vibration resistance is enhanced. However, the display panel drive mechanism of the present disclosure is not limited to a drive mechanism for a display panel mounted on an automobile, and can also be preferably used as a drive mechanism for a display panel mounted on various moving bodies such as a train, an airplane, and a ship. The display panel drive mechanism of the present disclosure is not limited to a use mounted on a moving body, and can also be preferably used as a mechanism for driving a display panel arranged in a building or the like.

## Claims

1. A display panel drive mechanism, comprising:
a first link mechanism including a first arm member, a second arm member and a third arm member that are coupled to the first arm member, and a fourth arm member coupled to the second arm member, wherein
the first arm member, the second arm member, and the fourth arm member are pivotally coupled to the display panel,
the third arm member and the fourth arm member are pivotally coupled to a base portion located behind the display panel, and
a maximum length of the fourth arm member is longer than a maximum length of the third arm member.

2. The display panel drive mechanism according to claim 1, further comprising:
an advancing and retreating mechanism having a first end that is pivotally coupled to the base portion, and configured to advance toward and move away from the base portion, wherein
a second end of the advancing and retreating mechanism is coupled to either the first arm member or the third arm member.

3. The display panel drive mechanism according to claim 1 or 2, wherein
the third arm member is configured to pivot about a first joint by which the third arm member is coupled to the base portion,
the fourth arm member is configured to pivot about a second joint by which the fourth arm member is coupled the display panel, or
the fourth arm member is configured to pivot about a third joint by which the fourth arm member is coupled to the base portion.

4. The display panel drive mechanism according to one of claims 1 to 3, further comprising:
a second link mechanism including a fifth arm member, a sixth arm member and a seventh arm member that are coupled to the fifth arm member, and an eighth arm member coupled to the sixth arm member;
a first connector connecting the first arm member and the fifth arm member;
a second connector connecting the third arm member and the seventh arm member; and
a third connector connecting the fourth arm member and the eighth arm member, wherein
the fifth arm member, the sixth arm member, and the eighth arm member are pivotally coupled to the display panel, wherein
the seventh arm member and the eighth arm member are pivotally coupled to the base portion, and
a maximum length of the eighth arm member is longer than a maximum length of the seventh arm member.

5. The display panel drive mechanism according to claim 4, further comprising:
an advancing and retreating mechanism having a first end and configured to advance toward and move away from the base portion, the first end being pivotally coupled to the base portion, wherein
a second end of the advancing and retreating mechanism is coupled to either the first connector or the second connector.

6. The display panel drive mechanism according to claim 4 or 5, wherein
the third arm member is configured to pivot about a first joint by which the third arm member is coupled to the base portion,
the fourth arm member is configured to pivot about a second joint by which the fourth arm member is coupled to the display panel,
the fourth arm member is configured to pivot about a third joint by which the fourth arm member is coupled to the base portion,
the seventh arm member is configured to pivot about a fourth joint by which the seventh arm member is coupled to the base portion,
the eighth arm member is configured to pivot about a fifth joint by which the eighth arm member is coupled to the display panel, or
the eighth arm member is configured to pivot about a sixth joint by which the eighth arm member is coupled to the base portion.

7. The display panel drive mechanism according to one of claims 1 to 6, wherein
the display panel drive mechanism is configured to
cause the display panel to undergo translational movement in a vertical direction from a starting point toward an end point positioned above the starting point; and
tilt the display panel when the display panel is at a position near the end point in such a manner that a pitch angle of the display panel about a rotation axis extending along a horizontal direction orthogonal to the vertical direction changes.

8. The display panel drive mechanism according to one of claims 1 to 7, wherein
the display panel drive mechanism is configured to
cause the display panel to undergo translational movement in the horizontal direction orthogonal to the vertical direction from a starting point toward an end point positioned to the left or right of the starting point; and
tilt the display panel when the display panel is at a position near the end point in such a manner that a yaw angle of the display panel about a rotation axis extending along the vertical direction changes.
